# EUROPÄISCHE PATENTSCHRIFT

(11) **EP 1 339 476 B1**
(45) Veröffentlichungstag und Bekanntmachung des Hinweises auf die Patenterteilung: **26.04.2006**
(21) Anmeldenummer: 01994707.6
(22) Anmeldetag: 22.11.2001
(51) Int. Cl.: B01D 46/42

(54) **VERFAHREN ZUR ÜBERWACHUNG VON FILTERANLAGEN**
METHOD FOR MONITORING FILTERING INSTALLATIONS
PROCEDE DE SURVEILLANCE D'INSTALLATIONS DE FILTRATION

(30) Priorität: 23.11.2000 DE 10058086
(43) Veröffentlichungstag der Anmeldung: 03.09.2003
(73) Patentinhaber: ADOS GmbH Mess- und Regeltechnik, 52078 Aachen (DE)
(72) Erfinder: Tippelt, Birger, 45661 Recklinghausen (DE)
(74) Vertreter: Behrendt, Arne
(86) Internationale Anmeldenummer: PCT/EP2001/013603
(87) Internationale Veröffentlichungsnummer: WO 2002/041974

(56) Entgegenhaltungen:
- DE-A- 4 226 145
- DE-A- 4 400 963
- US-A- 6 093 229

## Beschreibung

Die Erfindung betrifft ein Verfahren zur Überwachung von zum Filtern von staubbeladenen Gasen dienenden Filteranlagen, wobei der Staubgehalt des Reingases gemessen wird und wobei in Abhängigkeit vom zeitlichen Verlauf des Meßwertes ein Warnsignal ausgelöst wird.

Es ist bekannt, zur Kontrolle der Funktion von Filteranlagen den Staubgehalt des Reingases zu überwachen. Dabei wird typischerweise ein Warnsignal ausgelöst, wenn der ermittelte Staubgehalt einen vorgegebenen Schwellenwert überschreitet. Insbesondere wenn die Filteranlage zur Filterung von staubbeladenen Abgasen bestimmt ist, ist dieser Schwellenwert zumeist an entsprechend geltenden Emmissionsvorschriften orientiert. Üblicherweise liegt dieser Schwellenwert deutlich oberhalb des Staubgehaltes, den das Reingas im Normalbetrieb der Filteranlage aufweist.

Bei diesem Vorgehen ist nachteilhaft, daß kleinere Defekte und Undichtigkeiten, die im Betrieb der Filteranlage auftreten können, nicht detektiert werden. Derartige Defekte treten beispielsweise auf, wenn aufgrund der Druckdifferenz zwischen Rohgasseite und Reingasseite Undichtigkeiten in der Konstruktion der Filteranlage gezogen werden. Denkbar ist auch, daß aus einer größeren Anzahl von Filterelementen einzelne Elemente, beispielsweise beim Abreinigen, beschädigt werden. Solche Defekte führen dazu, daß der Staubgehalt auf der Reingasseite nur geringfügig zunimmt, ohne daß dabei der obengenannte Grenzwert überschritten wird.

Ein Verfahren der eingangs genannten Art wird beispielsweise in der DE 42 26 145 A1 beschrieben. Es handelt sich hierbei um ein Verfahren zur Überwachung von Filterelementen zum Filtern von heißen, staubbeladenen Gasen. Bei dem vorbekannten Verfahren wird ausgenutzt, daß bei der Abreinigung der Filterelemente kurzfristige Änderungen in den Druckverhältnissen der Filteranlage sowie im Staubgehalt des Reingases auftreten. Diese Größen werden bei jedem Abreinigungsvorgang gemessen, wobei zur Detektion von Defekten die Meßdaten aufeinanderfolgender Abreinigungszyklen zueinander in Beziehung gesetzt werden.

Auch aus der DE 44 00 963 A1 ist ein Verfahren bekannt, bei dem der Zustand einer Filteranlage überwacht wird, indem der Staubgehalt im Reingasstrom gemessen wird. Gemäß dem vorbekannten Verfahren werden die Staubgehaltsspitzen im Reingasstrom, welche beim Abreinigen einzelner einer Mehrzahl von Filterelementen auftreten, überwacht und miteinander verglichen, so daß erhöhte Staubkonzentrationen, die auf einen Defekt hindeuten, den jeweiligen Filterelementen direkt zugeordnet werden können.

Die vorbekannten Verfahren weisen eine Reihe von Nachteilen auf. Zum einen kann der Staubgehalt des Rohgases erheblichen Schwankungen unterliegen. Daraus ergibt sich, daß die bei der Abreinigung entstehenden Schwankungen im Staubgehalt ein unzuverlässiges Kriterium für die Fehlererkennung darstellen. Darüber hinaus kann bei dem vorbekannten Verfahren eine Warnung immer nur jeweils nach einer Abreinigung der Filterelemente erfolgen. Aus dem Zeitabstand zwischen den einzelnen Abreinigungszyklen ergibt sich unter Umständen ein unerwünscht großes Zeitintervall, während dessen ein Defekt in der Filteranlage nicht erkannt werden kann.

Der vorliegenden Erfindung liegt dementsprechend die Aufgabe zugrunde, unter Vermeidung der vorgenannten Nachteile ein Verfahren zur Überwachung von Filteranlagen bereit zu stellen, mit dem eine kontinuierliche Kontrolle des Funktionszustands gewährleistet ist und mit dem auch kleinere Störungen und Undichtigkeiten zuverlässig detektierbar sind.

Diese Aufgabe wird bei einem Verfahren der eingangs genannten Art dadurch gelöst, daß die Messung des Staubgehaltes kontinuierlich erfolgt, wobei das Warnsignal ausgelöst wird, wenn eine plötzliche Änderung des Meßsignals registriert wird.

Die Erfindung beruht auf der Erkenntnis, daß kleinere Defekte und Undichtigkeiten, die während des Betriebes der Filteranlage in den Filterelementen selber oder auch in der gesamten übrigen Konstruktion der Filteranlage auftreten, zu plötzlichen, abrupten Änderungen in der Staubkonzentration des Reingases führen. Im Normalbetrieb der Filteranlage schwankt der Staubgehalt des Reingases um einen im wesentlichen konstanten Mittelwert. Der zeitliche Verlauf des entsprechenden Meßwertes zeigt nur geringfügige Abweichungen von diesem Mittelwert, welche durch statistische Schwankungen bedingt sind. Tritt ein Fehler in der Filteranlage auf, so entsteht eine Undichtigkeit, durch die eine Verbindung zwischen Rohgas- und Reingasseite hergestellt wird. Der zum Staubgehalt des Reingases proportionale Meßwert steigt nun plötzlich um einen Wert an, der durch das Ausmaß der Undichtigkeit bestimmt ist. Danach schwankt das Meßsignal statistisch um einen neuen, nun höher liegenden Mittelwert. Dieser neue Mittelwert kann immer noch deutlich unterhalb eines oberen Grenzwertes liegen, durch den der Toleranzbereich der Filteranlage beschränkt wird. Das Verfahren gemäß der Erfindung hat also gegenüber dem obenbeschriebenen Stand der Technik den Vorteil, daß Fehler in der Filteranlage auch dann erkennbar sind, wenn die Anlage trotzdem noch innerhalb ihres Toleranzbereichs arbeitet. Die beschriebene plötzliche Änderung des Meßsignals kann jederzeit während des Betriebs der Filteranlage registriert werden, so daß eine kontinuierliche Überwachung gegeben ist.

Bei dem Verfahren gemäß der Erfindung ist es zweckmäßig, wenn ein zeitlicher Mittelwert des Meßsignals gebildet wird, wobei das Warnsignal ausgelöst wird, wenn der momentane Meßwert signifikant von dem zeitlichen Mittelwert abweicht. Auf diese Art und Weise kann erfindungsgemäß eine plötzliche Änderung des Meßsignals registriert werden, da durch die zeitliche Mitteilung des Meßsignals Rauscheinflüsse eliminiert werden. Weicht der momentane Meßwert um einen signifikanten Betrag vom zeitlichen Mittelwert ab, so wird hierdurch eine Änderung des Staubgehaltes angezeigt, die auf einen Fehler in der Filteranlage hinweist und nicht durch statistische Signalschwankungen bedingt sein kann. Durch die Mittellung wird gleichzeitig eine Zeitkonstante festgelegt, welche die Geschwindigkeit bestimmt, mit der eine Änderung des Meßsignals erfolgen muß, damit erfindungsgemäß das Warnsignal ausgelöst wird. Sinnvollerweise wird bei diesem Vorgehen das Warnsignal dann ausgelöst, wenn der momentane Meßwert um mehr als das mittlere Signalrauschen von dem zeitlichen Mittelwert abweicht. Auf diese Weise können durch Fehler in der Filteranlage bedingte Änderungen des Staubgehalts von statistischen Meßsignalschwankungen zuverlässig unterschieden werden.

Alternativ ist es bei dem Verfahren gemäß der Erfindung auch möglich, das Meßsignal zur Detektion einer plötzlichen Änderung zu differenzieren, wobei das Warnsignal ausgelöst wird, sobald die Steigung des Meßsignals einen vorgebbaren Schwellenwert überschreitet. Eine durch einen Defekt in der Filteranlage entstehende Undichtigkeit bewirkt eine plötzliche Steigung des Meßsignals, die durch zeitliches Differenzieren ermittelt werden kann. Ein großer Steigungswert weist dementsprechend auf einen Defekt hin und kann zur Auslösung des Wamsignals genutzt werden. Dabei ist zu beachten, daß das gegebenenfalls verrauschte Meßsignal vor der Differenzierung vorverarbeitet werden muß, da selbst kleinamplitudige, schnelle Signalschwankungen aufgrund von Rauschen zu großen Steigungswerten führen können, durch die ansonsten unerwünschterweise Fehlalarm ausgelöst würde.

Sinnvoll ist es ferner, wenn bei dem Verfahren gemäß der Erfindung ein weiteres Warnsignal ausgelöst wird, wenn das Meßsignal einen vorgebbaren Schwellenwert überschreitet. Dieser Schwellenwert entspricht dem obengenannten Grenzwert, durch den der Toleranzbereich der Filteranlagen festgelegt wird. Es stehen damit zwei voneinander unabhängige Warnsignale zur Verfügung, von denen das eine nur einen vergleichsweise geringfügigen Defekt anzeigt, während das andere auf eine erhebliche Betriebsstörung hinweist. Das letztere Warnsignal kann beispielsweise dazu benutzt werden, bei Überschreiten eines Emissionsgrenzwertes die gesamte Anlage automatisch abzustellen.

Vorteilhafterweise kann für das erfindungsgemäße Verfahren zur Messung des Staubgehaltes ein im Reingasstrom angeordneter elektrooptischer Meßwandler verwendet werden. Derartige Meßwandler zur Detektion von Staubpartikeln sind bekannt und arbeiten entweder nach dem Absorptions- oder nach dem Streulichtprinzip.

Wenn bei dem Verfahren gemäß der Erfindung, wie oben beschrieben, ein zeitlicher Mittelwert des Meßsignals gebildet wird, dann kann dies zweckmäßigerweise durch Tiefpaßfilterung des Meßsignals erfolgen. Als Meßsignal kann vorteilhafterweise die Ausgangsspannung eines elektrooptischen Meßwandlers genutzt werden, die proportional zur Staubkonzentration des untersuchten Gasvolumens ist.

Zur Durchführung des erfindungsgemäßen Verfahrens eignet sich eine Vorrichtung zur Überwachung von Filteranlagen, die aus einem elektrooptischen Meßwandler, welchem eine kontinuierliche Messung des Staubgehaltes durchgeführt wird, und aus einer Auswerteeinheit, welche den zeitlichen Verlauf des Meßsignals auswertet und ein Warnsignal auslöst, wenn eine plötzliche Änderung des Meßsignals auftritt, besteht. Vorteilhafterweise kann dabei als Meßwandler ein handelsüblicher Partikeldetektor verwendet werden. Die Auswerteeinheit, welche das Ausgangssignal des Meßwandlers verarbeitet, kann mit üblichen elektronischen Komponenten in Analog- oder Digitaltechnik realisiert werden.

Ausführungsbeispiele der Erfindung werden im folgenden anhand der Figuren erläutert. Es zeigen:
- Fig. 1: schematische Darstellung einer Filteranlage mit erfindungsgemäßer Überwachungsvorrichtung;
- Fig. 2: zeitlicher Verlauf des Meßsignals bei einer erfindungsgemäßen Messung des Staubgehalts im Reingasstrom;
- Fig.3: Blockschaltbild einer erfindungsgemäßen Überwachungsvorrichtung.

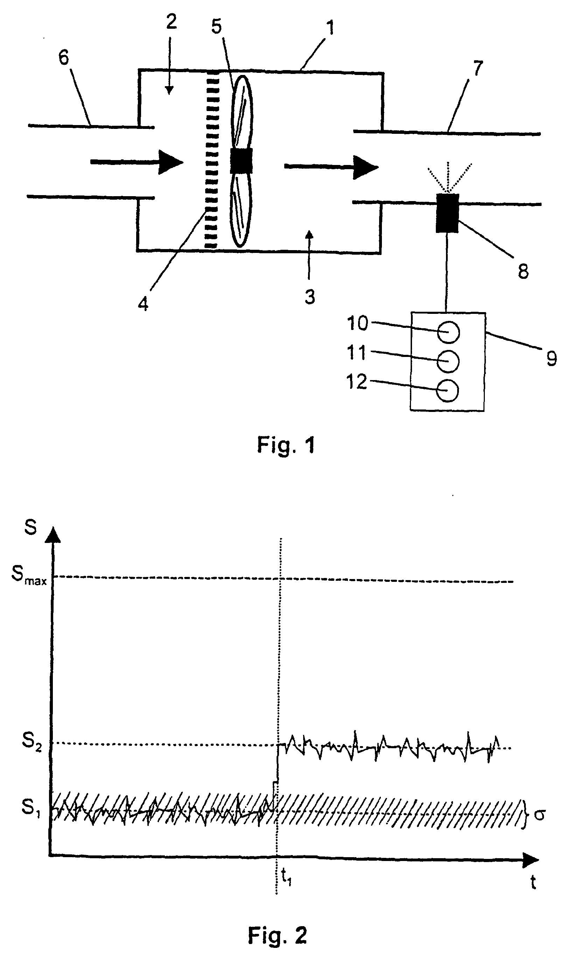

Die Figur 1 zeigt eine Filteranlage 1, in welcher eine Rohgasseite 2 von einer Reingasseite 3 durch ein Filterelement 4 getrennt wird. Bei dem Filterelement 4 kann es sich beispielsweise um eine Filtermembran handeln, welche für die in dem Rohgas befindlichen Staubpartikel undurchlässig ist. Auf der Reingasseite 3 des Filterelementes 4 ist ein Gebläse 5 angeordnet, durch welches das staubbeladene Gas durch die Filtereinheit 1 gezogen wird. Das Gas tritt durch eine Zuleitung 6 in die Filtereinheit 1 ein; das von Staub befreite Reingas wird aus der Filtereinheit 1 durch eine Abluftleitung 7 abgeführt. In der Abluftleitung 7 ist als Staubmeßvorrichtung ein Partikeldetektor 8 angebracht, der mit einer Auswerteeinheit 9 in Verbindung steht. Die Auswerteeinheit 9 kann über drei Kontrolleuchten 10, 11 und 12 den Zustand der Filteranlage 1 anzeigen. Mittels der ersten Kontrolleuchte 10 wird beispielsweise ein grünes Lichtsignal gegeben, wenn die Anlage im Normalzustand ist. Durch die Kontrolleuchte 11, welcher ein rotes Licht zugeordnet ist, wird beispielsweise angezeigt, daß der Staubgehalt im Reingas so hoch ist, daß der maximal zulässige Emissionswert überschritten ist. In diesem Fall muß gegebenenfalls die gesamte Anlage abgeschaltet werden. Die letzte Kontrolleuchte 12 zeigt gelbes Licht, wenn erfindungsgemäß eine plötzliche Änderung des Staubgehaltes im Reingas darauf hinweist, daß ein Defekt in der Anlage vorliegt und daß eine Inspektion notwendig ist.

Figur 2 zeigt das Meßsignal einer elektrooptischen Staubmeßvorrichtung als Funktion der Zeit. Das Meßsignal S ist proportional zum Staubgehalt des Reingases. Zu Beginn des dargestellten Zeitfensters schwankt das Meßsignal um einen Mittelwert S₁. Die in dem Diagramm erkennbaren Signalschwankungen beruhen auf statistischem Rauschen. Die Rauschamplitude beträgt dabei σ. Der Rauschbereich ist durch die Schraffur in dem Diagramm in Figur 2 dargestellt. Zu einem Zeitpunkt t₁ steigt das Meßsignal plötzlich an und behält danach einen konstanten neuen Mittelwert S₂ bei, wobei das Signalrauschen gleich geblieben ist. Dieser plötzliche Anstieg des Staubgehaltes des Reingases ist, wie oben beschrieben, auf eine kleinere Undichtigkeit in der Filteranlage zurückzuführen, durch welche Staub von der Rohgas- auf die Reingasseite gelangt. Erfindungsgemäß kann dieser plötzliche Anstieg dazu ausgenutzt werden, einen derartigen Effekt zu registrieren, um damit auf die Notwendigkeit einer Reparatur hinzuweisen. In dem Diagramm ist deutlich zu erkennen, daß der momentane Meßwert nach dem Zeitpunkt t₁ signifikant von dem vorher bestehenden Meßwert S₁ nach oben abweicht. Diese Abweichung ist deutlich größer als das mittlere Signalrauschen σ. Dieses Kriterium kann erfindungsgemäß dazu ausgenutzt werden, das Warnsignal auszulösen. In dem Diagramm ist ferner ein oberer Grenzwert Sₘₐₓ eingezeichnet, welcher den maximal zulässigen Emmissionswert kennzeichnet. Überschreitet das Meßsignal diese Schwelle, so muß in jedem Fall ein weiteres Warnsignal ausgelöst werden, das auf einen Fehler hinweist, der sofortige Maßnahmen erfordert.

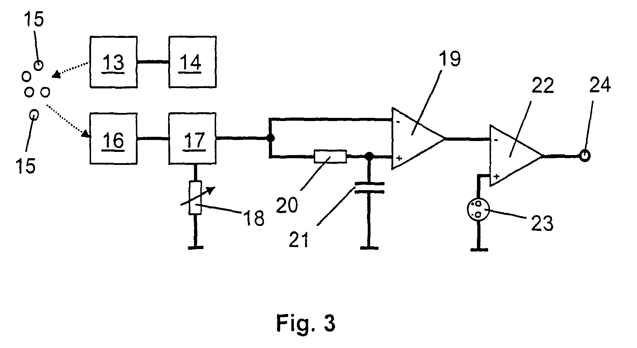

Die Figur 3 zeigt eine beispielhafte Realisierung für eine erfindungsgemäße Überwachungsvorrichtung. Diese besteht aus einer Leuchtdiode 13, welche von einer Treiberschaltung 14 angesteuert wird. Das von der Leuchtdiode 13 emittierte Licht wird von im Reingasstrom befindlichen Staubpartikeln 15 gestreut und fällt auf einen Lichtdetektor 16. Dessen Ausgangssignal wird von einem nachgeschalteten Verstärker 17 verstärkt, wobei der Verstärkungsfaktor über ein Potentiometer 18 einstellbar ist, so daß die Empfindlichkeit der Überwachungsvorrichtung variabel ist. Das Ausgangssignal des Verstärkers 17 ist eine elektrische Spannung, die proportional zum Staubgehalt des Reingases ist. Dieses Signal wird auf die Eingänge eines Differenzverstärkers 19 gegeben, wobei einem der Eingänge des Differenzverstärkers 19 ein aus einem Widerstand 20 und einem Kondensator 21 bestehendes Tiefpaßfilter vorgeschaltet ist. Das Tiefpaßfilter führt erfindungsgemäß eine zeitliche Mitteilung des Meßwertes aus, wobei die Zeitkonstante durch die Parameter der beiden Bauteile 20, 21 bestimmt wird. Am Ausgang des Differenzverstärkers 19 liegt dann ein Meßsignal an, das proportional zur Differenz zwischen momentanem Meßwert und zeitlichem Mittelwert ist. Dieses Differenzsignal wird auf den Eingang eines Komparators 22 gegeben, durch den es mit einer variablen Spannung 23 verglichen wird. Überschreitet das Differenzsignal einen durch die variable Spannung 23 vorgegebenen Schwellenwert, so wird ein Ausgang 24 aktiviert der erfindungsgemäß eine plötzliche Änderung des Staubgehaltes anzeigt. Der in der Figur 3 dargestellten Anordnung kann sinnvollerweise ein Flip-Flop-Element nachgeschaltet werden, durch welches dann das Auftreten einer plötzlichen Signaländerung dauerhaft angezeigt wird.

## Patentansprüche

1. Verfahren zur Überwachung von zum Filtern von staubbeladenen Gasen dienenden Filteranlagen (1), wobei der Staubgehalt des Reingases (3) gemessen wird und wobei in Abhängigkeit vom zeitlichen Verlauf des Meßwertes (S) ein Warnsignal ausgelöst wird,
**dadurch gekennzeichnet,**
**daß** die Messung des Staubgehaltes kontinuierlich als Funktion der Zeit erfolgt, wobei ein zeitlicher Mittelwert des Meßsignals (S₁) gebildet wird und wobei das Warnsignal ausgelöst wird, wenn eine plötzliche Änderung des Meßsignals (S) **dadurch** registriert wird, dass der momentane Meßwert (S) signifikant von dem zeitlichen Mittelwert (S₁) abweicht.

2. Verfahren nach Anspruch 1, **dadurch gekennzeichnet, daß** das Warnsignal dann ausgelöst wird, wenn der momentane Meßwert (S) um mehr als das mittlere Signalrauschen (σ) von dem zeitlichen Mittelwert (S₁) abweicht.

3. Verfahren nach Anspruch 1, **dadurch gekennzeichnet, daß** ein weiteres Warnsignal ausgelöst wird, wenn das Meßsignal (S) einen vorgebbaren Schwellenwert (Sₘₐₓ) überschreitet.

4. Verfahren nach Anspruch 1, **dadurch gekennzeichnet, daß** zur Messung des Staubgehaltes ein im Reingasstrom angeordneter elektrooptischer Meßwandler (8) verwendet wird.

5. Verfahren nach Anspruch 1, **dadurch gekennzeichnet, daß** die zeitliche Mittelung durch Tiefpaßfilterung des Meßsignals erfolgt.

6. Vorrichtung zur Überwachung von Filteranlagen gemäß dem Verfahren nach Anspruch 1, **gekennzeichnet durch** einen elektrooptischen Meßwandler (8), zur Messung des Staubgehaltes des Reingases (3), und eine Auswerteeinheit (9), welche den zeitlichen Verlauf des Meßsignals (S) kontinuierlich auswertet und einen zeitlichen Mittelwert des Meßsignals (S₁) bildet, wobei die Auswerteeinheit (9) ein Warnsignal auslöst, wenn sie eine plötzliche Änderung des Meßsignals (S) **dadurch** registriert, dass der momentane Meßwert (S) signifikant von dem zeitlichen Mittelwert (S₁) abweicht.

## Claims

1. A method of monitoring filter installations (1) serving for filtering dust-laden gases, wherein the dust content of the clean gas (3) is measured and wherein a warning signal is triggered in dependence on the variation in respect of time of the measurement value (S), **characterised in that** measurement of the dust content is effected continuously as a function of time, wherein an average value in respect of time of the measurement signal (S₁) is formed and wherein the warning signal is triggered when a sudden change in the measurement signal (S) is registered by the instantaneous measurement value (S) differing significantly from the average value (S₁) in respect of time.

2. A method according to claim 1 **characterised in that** the warning signal is triggered when the instantaneous measurement value (S) differs from the average value (S₁) in respect of time by more than the average signal noise (σ).

3. A method according to claim 1 **characterised in that** a further warning signal is triggered if the measurement signal (S) exceeds a predeterminable threshold value (Smax).

4. A method according to claim 1 **characterised in that** an electro-optical measurement transducer (8) arranged in the clean gas flow is used for measuring the dust content.

5. A method according to claim 1 **characterised in that** averaging in respect of time is effected by low pass filtering of the measurement signal.

6. Apparatus for monitoring filter installations in accordance with the method according to claim 1 **characterised by** an electro-optical measurement transducer (8) for measuring the dust content of the clean gas (3) and an evaluation unit (9) which continuously evaluates the variation in respect of time of the measurement signal (S) and forms an average value in respect of time of the measurement signal (S₁), wherein the evaluation unit (9) triggers a warning signal if it registers a sudden change in the measurement signal (S) by the instantaneous measurement value (S) differing significantly from the average value (S₁) in respect of time.

## Revendications

1. Procédé de surveillance d'installations de filtration (1) destinées à filtrer des gaz chargés de poussière, où la teneur en poussière du gaz pur (3) est mesurée et où, en fonction du cheminement dans le temps de la valeur de mesure (S), un signal d'avertissement est déclenché, **caractérisé en ce que** la mesure de la teneur en poussière a lieu continuellement en fonction du temps, où une valeur moyenne temporaire du signal de mesure (S₁) est formée, et où le signal d'avertissement est déclenché lorsqu'une modification brusque du signal de mesure (S) est enregistrée par le fait que la valeur de mesure momentanée (S) s'écarte d'une manière importante de la valeur moyenne temporaire (S₁).

2. Procédé selon la revendication 1, **caractérisé en ce que** le signal d'avertissement est déclenché lorsque la valeur de mesure momentanée (S) s'écarte de la valeur moyenne temporaire (S₁) selon plus que le bruit de signal moyen (σ).

3. Procédé selon la revendication 1, **caractérisé en ce qu'**un signal d'avertissement supplémentaire est déclenché lorsque le signal de mesure (S) dépasse une valeur de seuil prédéfinissable (Sₘₐₓ).

4. Procédé selon la revendication 1, **caractérisé en ce que** pour la mesure de la teneur en poussière, un transducteur électro-optique (8) disposé dans un écoulement de gaz pur est utilisé.

5. Procédé selon la revendication 1, **caractérisé en ce que** l'établissement de la moyenne temporaire a lieu par une filtration passe-bas du signal de mesure.

6. Dispositif de surveillance d'installations de filtration conformément au procédé selon la revendication 1, **caractérisé par** un transducteur électrooptique (8), pour la mesure de la teneur en poussière du gaz pur (3), et une unité d'évaluation (9) qui évalue continuellement le cheminement dans le temps du signal de mesure (S) et qui forme une valeur moyenne temporaire du signal de mesure (S₁), où l'unité d'évaluation (9) déclenche un signal d'avertissement lorsqu'elle enregistre une modification brusque du signal de mesure (S) par le fait que la valeur de mesure momentanée (S) s'écarte d'une manière importante de la valeur moyenne temporaire (S₁).
